# FASCICULE DE BREVET EUROPEEN

(11) **EP 1 647 683 B1**
(45) Date de publication et mention de la délivrance du brevet: **21.05.2008**
(21) Numéro de dépôt: 05300817.3
(22) Date de dépôt: 14.10.2005
(51) Int. Cl.: F01N 3/20, F01N 9/00

(54) **Procédé de commande d'un dispositif de chauffage pour un catalyseur d'oxidation agencé dans un conduit d'échappement de moteur à combustion de véhicule automobile**
Steuerverfahren einer Heizvorrichtung für einen Oxidationskatalysator im Abgasstrang einer Brennkraftmaschine eines Kraftfahrzeugs
Control method of a heating device for an oxidation catalyst disposed in an exhaust line of an internal combustion engine of an automobile

(30) Priorité: 18.10.2004 FR 0452356
(43) Date de publication de la demande: 19.04.2006
(73) Titulaire: RENAULT S.A.S., 92100 Boulogne Billancourt (FR)
(72) Inventeur: Dewaele, Gilles, 92500, Reuil Malmaison (FR); Fresnet, François, 92000, Nanterre (FR); Keretli, Fahri, 78320, Le Mesnil Saint Denis (FR)

(56) Documents cités:
- DE-A1- 10 135 643
- US-A- 5 272 871
- US-A1- 2002 031 453
- US-A1- 2003 115 857
- US-A1- 2004 115 490
- US-B1- 6 655 130

## Description

L'invention concerne un dispositif de chauffage pour un catalyseur d'oxydation agencé dans un conduit d'échappement de véhicule automobile.

L'invention concerne plus particulièrement un dispositif de chauffage pour un catalyseur d'oxydation agencé dans un conduit d'échappement de moteur à combustion, notamment de véhicule automobile, comportant une source d'hydrogène qui est raccordée au conduit d'échappement en amont du catalyseur d'oxydation de manière à alimenter le catalyseur en hydrogène.

L'invention concerne aussi un procédé de maintien en température de fonctionnement d'un catalyseur appartenant à un tel dispositif.

Les moteurs à combustion interne permettent de transformer en énergie mécanique l'énergie issue de la combustion d'un mélange air/carburant. Si le mélange initial est dosé selon le rapport stoechiométrique théorique, c'est-à-dire 1 gramme de carburant pour 14,7 grammes d'air, les produits issus de la combustion sont du dioxyde de carbone (CO₂) et de l'eau (H₂O).

Toutefois, dans certaines phases de fonctionnement du moteur, le mélange carburé peut être riche, c'est-à-dire comporter un excès de carburant, ou pauvre, c'est-à-dire comporter un excès d'air.

Dans le cas d'un mélange riche, il apparaît dans les produits issus de la combustion, en plus de l'eau et du dioxyde de carbone, des molécules réductrices telles que des hydrocarbures (HC), du monoxyde de carbone (CO) et de l'hydrogène (H₂).

Dans le cas d'un mélange pauvre, il y a apparition dans les gaz d'échappement de molécules oxydantes telles que des oxydes d'azote (NOx), et de l'oxygène (O₂).

Pour limiter la production de ces substances polluantes, il est donc nécessaire que le moteur fonctionne le plus souvent possible en brûlant un mélange dosé selon les proportions stoechiométriques, mais cela n'est pas toujours possible, ni même souhaitable.

En effet, lorsque le moteur est froid ou lorsque l'on désire obtenir une puissance maximale, par exemple au cours d'une accélération du véhicule, il est nécessaire de faire fonctionner le moteur avec un mélange riche.

Au contraire, lors des phases de décélération ou lorsque le besoin de puissance est faible, on a intérêt à faire fonctionner le moteur à l'aide d'un mélange pauvre pour réduire la consommation de carburant.

Depuis plusieurs années déjà, des normes de dépollution imposent de munir les véhicules automobiles d'un dispositif catalytique, ou catalyseur, destiné à traiter chimiquement les gaz d'échappement pour les débarrasser de la majeure partie des substances polluantes qu'ils contiennent.

Les dispositifs catalytiques généralement utilisés ont pour première fonction d'achever l'oxydation du mélange carburé qui n'est qu'incomplète à l'intérieur du moteur. Il s'agit alors de regrouper sur des sites catalytiques des molécules oxydantes et des molécules réductrices, tel que le monoxyde de carbone, présentes dans les gaz d'échappement pour qu'elles se combinent afin de produire de l'eau et du dioxyde de carbone. Ces sites sont formés sur un support, appelé monolithe, qui est une structure poreuse présentant une grande superficie de contact avec les gaz d'échappement traversant le pot, et qui est revêtue de diverses substances chimiques ayant des propriétés catalytiques.

La capacité du catalyseur à oxyder les molécules réductrices croît au fur et à mesure que sa température augmente. On définit ainsi une température d'amorçage du catalyseur à laquelle le catalyseur oxyde la quasi-totalité des molécules réductrices qui le traverse. Cette température d'amorçage est par exemple de l'ordre de 150°C pour les moteurs diesel et de l'ordre de 200°C pour les moteurs à essence.

Le catalyseur est généralement chauffé jusqu'à cette température d'amorçage grâce aux gaz de combustion chauds qui sont rejetés dans le conduit d'échappement et qui traversent le catalyseur.

Il existe cependant plusieurs situations dans lesquelles la température du catalyseur est susceptible d'être inférieure à la température d'amorçage.

Tout d'abord, au démarrage du moteur, le catalyseur d'oxydation est froid et ne permet pas d'oxyder les molécules réductrices.

Ainsi entre le démarrage du moteur et l'instant auquel le catalyseur est amorcé par le passage des gaz d'échappement chauds, une grande quantité de substances polluantes, notamment de monoxyde de carbone et/ou d'hydrocarbures, est rejetée dans l'atmosphère. Cette quantité de substances polluantes est d'autant plus grande qu'au démarrage le moteur fonctionne nécessairement avec un mélange riche. Le catalyseur n'est amorcé que lorsque sa température atteint la température d'amorçage.

Ensuite, lorsque le moteur tourne au ralenti durant une longue période, par exemple lorsque le véhicule est bloqué dans un embouteillage, la température des gaz d'échappement chute et le catalyseur risque de se refroidir en deçà de sa température d'amorçage, et donc d'être désamorcé.

De plus, certains véhicules sont équipés d'un système dit "stop and start" qui coupe le fonctionnement du moteur lorsque le véhicule est arrêté temporairement, par exemple à un feu rouge ou dans un embouteillage. La fréquence des coupures du moteur risque alors de retarder l'amorçage du catalyseur ou de désamorcer le catalyseur.

Le système "stop and start" est notamment mis en oeuvre à bord des véhicules qui sont munis d'une source d'énergie électrique autonome, telle qu'une pile à combustible. L'alimentation du circuit électrique du véhicule ne dépend alors plus d'un alternateur entraîné par le moteur, comme c'est le cas sur les véhicules qui sont équipés d'une batterie, ce qui permet de couper le moteur sans risquer de manquer d'énergie électrique.

Dans le but de diminuer la durée d'amorçage du catalyseur, et ainsi la quantité de substances polluantes rejetée dans l'atmosphère, il existe des procédés d'aide à l'amorçage du catalyseur par injection d'hydrogène dans le conduit d'échappement en amont du catalyseur.

En effet, au contact du catalyseur froid, l'hydrogène est oxydé par les substances catalytiques. Cette réaction d'oxydation qui est fortement exothermique, dégage une quantité de chaleur suffisante pour amorcer le catalyseur.

Selon un mode de réalisation connu de ce type de procédé, la source d'hydrogène est un réservoir d'hydrogène. Or, un réservoir d'hydrogène est lourd et volumineux.

De plus, il est nécessaire de remplir régulièrement le réservoir d'hydrogène. Or, les sources d'approvisionnement en hydrogène sont peu répandues.

Selon une autre mode de réalisation connu de ce type de procédé, un électrolyseur est utilisé pour produire de l'hydrogène à partir d'eau. Cependant, un électrolyseur consomme beaucoup d'électricité. De plus, un tel système impose à l'utilisateur du véhicule de remplir fréquemment le réservoir d'eau.

Le document US-A-2002.031.453 divulgue un dispositif de chauffage d'un catalyseur dans lequel l'hydrogène est produit par un reformeur. Cependant, le catalyseur n'est pas agencé dans une conduite d'échappement d'un moteur à combustion. Le procédé de commande du dispositif n'est donc pas adapté aux contraintes de fonctionnement d'un moteur à combustion de véhicule automobile.

Le document US-A-2004/115.490 divulgue un dispositif de chauffage pour un véhicule automobile qui comporte un catalyseur d'oxydation agencé dans un conduit d'échappement de moteur à combustion (44) de véhicule automobile. Le dispositif comporte un reformeur d'hydrocarbures qui est embarqué à bord du véhicule et qui est raccordé au conduit d'échappement (50) en amont du catalyseur d'oxydation de manière à alimenter le catalyseur (46) en hydrogène. Le reformeur comporte :
- un premier étage de production d'un gaz dit brut qui contient un mélange d'hydrogène et de monoxyde de carbone ;
- un second étage de purification qui est alimenté en gaz brut et dans lequel l'hydrogène est séparé du monoxyde de carbone de manière à produire un reformat d'hydrogène purifié.

Cependant, dans ce document, le catalyseur est alimenté en gaz brut par l'intermédiaire de la conduite tandis que dans l'invention objet de la présente demande, le catalyseur est alimenté en reformat purifié. De plus, il n'est pas précisé que le catalyseur est chauffé par oxydation de l'hydrogène produit par le reformeur.

En outre, ce type de procédé est conçu pour chauffer le catalyseur froid au démarrage du véhicule. Cependant, il n'est pas prévu de maintenir le catalyseur à sa température d'amorçage

Selon d'autres caractéristiques de l'invention :
- le reformeur comporte un premier étage de production d'un gaz dit brut qui contient un mélange d'hydrogène et de monoxyde de carbone, et il comporte un second étage de purification qui est alimenté en gaz brut et dans lequel l'hydrogène est séparé du monoxyde de carbone de manière à produire un reformat d'hydrogène purifié ;
- le catalyseur est alimenté en reformat d'hydrogène purifié ;
- le dispositif comporte des moyens de régulation de la quantité de reformat d'alimentation du catalyseur d'oxydation ;
- le catalyseur est alimenté en gaz brut ;
- le dispositif comporte des moyens de régulation de la quantité de gaz brut d'alimentation du catalyseur d'oxydation ;
- le reformeur comporte un brûleur de chauffage du reformeur qui est alimenté en carburant et en air, et qui produit des gaz de combustion chauds qui sont évacués dans une conduite d'évacuation, et le dispositif comporte une conduite de ponction qui raccorde la conduite d'évacuation au conduit d'échappement en amont du catalyseur d'oxydation ;
- la conduite de ponction comporte des moyens de régulation de la quantité de gaz de combustion chauds dérivés vers le conduit d'échappement ;
- le reformeur alimente en reformat d'hydrogène purifié une pile à combustible embarquée à bord du véhicule.

L'invention propose aussi un procédé de maintien en température d'un catalyseur appartenant à un tel dispositif, caractérisé en ce qu'il comporte les phases suivantes :
- une première phase d'initialisation au cours de laquelle on compare un régime du moteur à combustion mesuré à un régime dit de seuil, et au cours de laquelle on compare une température mesurée du catalyseur à une température dite de seuil ;
- une deuxième phase de contrôle qui est enclenchée lorsque le régime moteur mesuré est inférieur au régime de seuil et lorsque la température mesurée du catalyseur est inférieure à la température de seuil, et au cours de laquelle on contrôle si le reformeur est opérationnel pour produire du reformat d'hydrogène purifié ;
- une troisième phase d'évaluation de la capacité de production instantanée d'hydrogène du reformeur qui est enclenchée lorsque le reformeur est opérationnel, et au cours de laquelle on évalue la quantité instantanée d'hydrogène que le reformeur est susceptible de produire pour chauffer le catalyseur ;
- une quatrième phase de chauffage du catalyseur qui est enclenchée lorsque le reformeur est susceptible de produire une quantité instantanée d'hydrogène suffisante pour chauffer le catalyseur, et au cours de laquelle l'hydrogène est injecté dans le conduit d'échappement

Selon d'autres caractéristiques du procédé selon l'invention :
- lors d'une cinquième phase de chauffage qui est enclenchée alternativement à la quatrième phase de chauffage si le régime moteur mesuré est nul, le brûleur est suralimenté en air de manière que les gaz de combustion contiennent de l'oxygène, et que les gaz de combustion ainsi enrichis en oxygène soient injectés dans le conduit d'échappement en plus de l'hydrogène ;
- lorsque le régime du moteur à combustion mesuré reste constamment nul au-delà d'une durée déterminée, le procédé de maintien en température est arrêté ;
- si, lors de la deuxième phase de contrôle, le reformeur est contrôlé comme n'étant pas fonctionnel, une phase alternative de chauffage est enclenchée, au cours de laquelle le brûleur est activé de manière à alimenter le conduit d'échappement en gaz de combustion chauds de manière à chauffer le catalyseur.

D'autres caractéristiques et avantages apparaîtront au cours de la lecture de la description détaillée qui suit pour la compréhension de laquelle on se reportera aux dessins annexés parmi lesquels :
- la figure 1 est une représentation schématique d'un véhicule automobile qui comporte une ligne d'échappement équipée d'un catalyseur d'oxydation et qui comporte un reformeur d'hydrogène qui est susceptible d'alimenter le catalyseur en hydrogène selon les enseignements de l'invention ;
- la figure 2 est une vue similaire à celle de la figure 1 qui représente une variante de l'invention ;
- la figure 3 est un schéma-bloc qui représente un procédé d'amorçage du catalyseur d'oxydation.

Dans la suite de la description, des éléments similaires, analogues ou identiques seront indiqués par des mêmes numéros de référence.

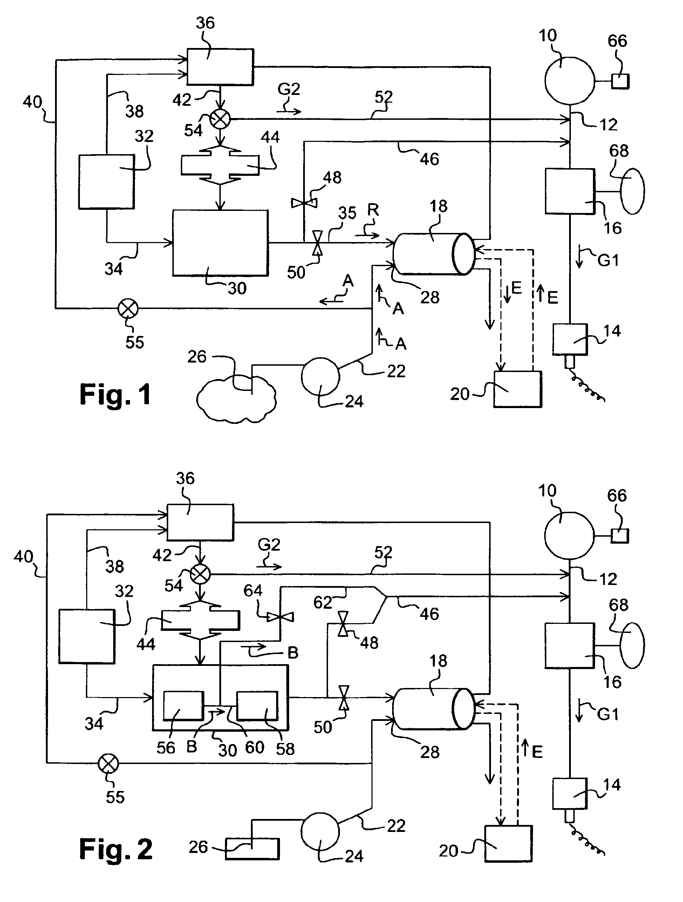

On adoptera par la suite une direction d'écoulement des fluides qui est dirigée de l'amont vers l'aval comme indiqué par les flèches des figures 1 et 2.

On a représenté schématiquement à la figure 1 un véhicule automobile qui est équipé d'un moteur à combustion interne 10 qui permet de transformer en énergie mécanique l'énergie issue de la combustion d'un mélange d'air et de carburant.

Les gaz d'échappement "G1" produits par cette combustion sont ensuite évacués dans un conduit d'échappement 12 qui comporte une extrémité aval 14 qui évacue ces gaz d'échappement "G1" dans l'atmosphère.

Les gaz d'échappement "G1" sont susceptibles de contenir des molécules réductrices polluantes, tels que du monoxyde de carbone CO ou des hydrocarbures HC, qu'il est préférable d'éliminer avant que les gaz d'échappement "G1" ne soient rejetés dans l'atmosphère. A cette fin, un catalyseur d'oxydation 16, ou convertisseur catalytique, est agencé dans la ligne d'échappement 12.

Le catalyseur d'oxydation 16 comporte par exemple un monolithe (non représenté) poreux qui est imprégné de substances catalytiques oxydantes. Lorsque les gaz d'échappement "G1" traversent le monolithe, les molécules réductrices sont oxydées au contact des substances catalytiques. Par exemple, le monoxyde de carbone CO est converti en dioxyde de carbone CO₂.

La quantité de molécules réductrices que le catalyseur d'oxydation 16 élimine dépend de la température du catalyseur d'oxydation 16. Le catalyseur d'oxydation 16 comporte notamment une température caractéristique qui est appelée température d'amorçage "Ta".

Lorsque la température du catalyseur 16 est supérieure ou égale à la température d'amorçage "Ta", le catalyseur est dans un état dit amorcé dans lequel il est apte à éliminer la quasi-totalité des molécules réductrices contenues dans les gaz d'échappement "G1".

Par ailleurs, une pile à combustible 18 est ici embarquée à bord du véhicule afin de produire de l'électricité qui est nécessaire au fonctionnement d'équipements électriques 20 du véhicule. Les équipements électriques 20 sont ici alimentés en électricité "E" par l'intermédiaire de conducteurs électriques qui sont représentés en traits interrompus à la figure 1.

Pour pouvoir produire de l'électricité, la pile à combustible 18 doit être alimentée en comburant et en carburant. Le comburant est ici de l'air contenant de l'oxygène O₂ et le carburant est de l'hydrogène H₂.

Ainsi, le véhicule comporte une conduite 22 d'alimentation de la pile 18 en air "A" dans laquelle un compresseur 24 est agencé. La conduite d'alimentation en air 22 comporte une extrémité amont 26 d'aspiration d'air atmosphérique et une extrémité aval 28 d'alimentation de la pile à combustible 18.

L'air "A" est ainsi aspiré par l'extrémité d'aspiration 26, puis il est comprimé dans le compresseur 24 avant d'alimenter la pile à combustible 18 en tant que comburant via l'extrémité d'alimentation en air 28.

Le véhicule comporte aussi un reformeur 30 qui est destiné à produire de l'hydrogène H₂ à partir d'hydrocarbures qui sont contenus dans un réservoir 32. Une conduite d'alimentation en hydrocarbures 34 raccorde le réservoir 32 au reformeur 30.

Le produit du reformeur 30, qui est appelé "reformat", est obtenu par une réaction appelée "reformage". Le reformat "R" qui comporte de l'hydrogène H₂ pur, est conduit jusqu'à la pile à combustible 18 par l'intermédiaire d'une conduite 35 d'alimentation en reformat "R".

Le reformeur 30 doit être chauffé au-delà d'une température de fonctionnement "Tr" pour que les hydrocarbures soient transformés en reformat. Or, le reformage est une réaction endothermique.

Il est donc prévu d'apporter la quantité de chaleur suffisante pour maintenir la température du reformeur 30 au-delà de la température de fonctionnement "Tr" en brûlant un mélange d'hydrocarbures et d'air dans un brûleur 36 de chauffage du reformeur 30.

Avantageusement, le brûleur 36 est alimenté en hydrocarbures par le réservoir 32 par l'intermédiaire d'un conduit 38, et il est alimenté en air par un conduit de dérivation 40 qui raccorde la conduite d'alimentation en air 22, en aval du compresseur 24, au brûleur 36.

Les gaz de combustion chauds "G2" qui sont issus du brûleur 36, sont ensuite évacués dans une conduite d'évacuation 42 qui raccorde le brûleur 36 à un échangeur de chaleur 44 qui transmet la chaleur depuis les gaz de combustion "G2" jusqu'au reformeur 30.

Selon les enseignements de l'invention, il est prévu d'utiliser une portion du reformat "R" produit par le reformeur 30 pour accélérer le chauffage et/ou maintenir le catalyseur d'oxydation 16 au-delà de sa température d'amorçage "Ta".

A cet effet, une conduite de dérivation 46 raccorde la conduite d'alimentation en reformat 35 au conduit d'échappement 12 en amont du catalyseur d'oxydation 16.

Un premier clapet de régulation du débit 48 est agencé dans la conduite de dérivation 46, et un deuxième clapet de régulation du débit 50 est agencé dans la conduite d'alimentation en reformat 35 en aval du raccord avec la conduite de dérivation 46. Le premier clapet 48 et le deuxième clapet 50 seront par la suite appelés respectivement clapet de dérivation de reformat 48 et clapet d'alimentation 50.

Le clapet de dérivation de reformat 48 est un moyen de régulation de la proportion ou de la quantité de reformat "R" qui est dérivée dans la conduite de dérivation 46. A cet effet, le véhicule comporte ici une unité électronique de commande (non représentée) qui commande le clapet de dérivation de reformat 48.

Lorsque le clapet de dérivation de reformat 48 est commandé de manière à ce que du reformat "R" soit dérivé dans la conduite de dérivation 46, des molécules d'hydrogène H₂ du reformat "R" sont mélangées aux gaz d'échappement "G1" qui s'écoulent vers le catalyseur d'oxydation 16 qui est agencé en aval.

Au contact des substances catalytiques qui sont présentes dans le catalyseur d'oxydation 16, l'hydrogène H₂ est oxydé de façon exothermique en produisant de l'eau H₂O. Cette réaction dégage une quantité de chaleur suffisante pour chauffer le catalyseur d'oxydation 16 au-delà de sa température d'amorçage "Ta".

Le deuxième clapet d'alimentation 50 est aussi commandé par l'unité de commande, et il permet de réguler la quantité de reformat "R" qui alimente la pile à combustible 18.

Selon une variante de l'invention qui est représentée à la figure 1, une conduite de ponction 52 raccorde la conduite d'évacuation 42 au conduit d'échappement 12 en amont du catalyseur d'oxydation 16, de manière à dériver une partie des gaz de combustion "G2" du brûleur 36 vers le catalyseur d'oxydation 16.

Un troisième clapet de régulation du débit 54 est agencé dans la conduite de ponction 52 de manière à réguler la quantité ou la proportion de gaz de combustion "G2" qui doit être dérivée vers le catalyseur d'oxydation 16. Le troisième clapet 54 qui est ici commandé par l'unité électronique de commande, sera par la suite appelé clapet de ponction 54.

Ainsi, lorsque les gaz de combustion "G2" chauds dont la température dépasse la température d'amorçage du catalyseur "Ta", sont dérivés dans la conduite de ponction 52, ils sont mélangés avec les gaz d'échappement "G1" en amont du catalyseur 16.

Lorsque les gaz d'échappement "G1" sont relativement "froids", c'est-à-dire que leur température est inférieure à la température d'amorçage du catalyseur "Ta", par exemple lorsque le moteur 10 fonctionne au ralenti, les gaz de combustion "G2" relativement "chauds", c'est-à-dire que leur température est supérieure à la température d'amorçage du catalyseur "Ta", apportent une quantité de chaleur qui permet de monter la température le catalyseur d'oxydation 16 de façon à l'amorcer.

Ainsi, lorsque les gaz d'échappement "G1" ne contiennent pas suffisamment d'oxygène O₂ pour oxyder les molécules réductrices, le brûleur 36 est suralimenté en air de manière que les gaz de combustion "G2" contiennent de l'oxygène O₂. Il est ainsi possible d'injecter l'oxygène O₂ contenue dans les gaz de combustion "G2" dans le catalyseur d'oxydation 16 via la conduite de ponction 52 afin de compenser le manque d'oxygène O₂ des gaz d'échappement "G1".

De plus, la présence d'oxygène O₂ dans le catalyseur d'oxydation 16 permet d'accélérer la montée en température du catalyseur 16 selon le phénomène d'oxydation exothermique décrit précédemment.

Selon une autre variante de l'invention représentée à la figure 2, le reformeur 30 comporte un premier étage 56 de production d'un gaz brut "B" à partir des hydrocarbures qui alimentent le reformeur 30. Le gaz brut "B" contient principalement un mélange d'hydrogène H₂ et de monoxyde de carbone CO.

Le monoxyde de carbone CO étant un poison pour la pile à combustible 18, il faut l'éliminer du gaz brut "B" pour obtenir le reformat "R" d'hydrogène purifié qui est apte à alimenter la pile à combustible 18.

A cet effet, le reformeur 30 comporte un second étage 58 de purification qui est alimenté en gaz brut "B" par l'intermédiaire d'une conduite interne 60. Le second étage 58 permet de séparer le monoxyde de carbone CO de l'hydrogène H₂ afin d'obtenir le reformat "R" d'hydrogène purifié.

Selon cette variante, une conduite de détournement 62 est agencée de manière à raccorder la conduite interne 60 jusqu'au conduit d'échappement 12 en amont du catalyseur d'oxydation 16 afin de pouvoir détourner une partie du gaz brut "B" produit par le premier étage 56 du reformeur 30 vers le catalyseur d'oxydation 16.

Un clapet 64 de régulation du débit de gaz brut "B" est agencé dans la conduite de détournement 62. Le clapet 64 qui est commandé par l'unité électronique de commande, sera par la suite appelé clapet de détournement 64.

De préférence, comme illustré à la figure 2, la conduite de détournement 62 est raccordée à la conduite de dérivation 46 en aval du clapet de dérivation de reformat 48.

Lorsque le catalyseur 16 est alimenté avec le gaz brut "B", le catalyseur 16 est chauffé d'une part par la réaction exothermique avec l'hydrogène H₂ contenu dans le gaz brut "B", et d'autre part par la réaction d'oxydation du monoxyde de carbone CO qui est aussi exothermique.

Ainsi, lorsque le catalyseur 16 n'est pas amorcé ou lorsqu'il y a risque de désarmorçage du catalyseur 16, il est possible de commander les clapets de détournement 64 et de dérivation de reformat 48 de manière que :
- le catalyseur 16 soit alimenté uniquement en gaz brut "B" ;
- le catalyseur 16 soit alimenté uniquement en reformat "R" ;
- le catalyseur 16 soit alimenté avec un mélange de reformat "R" et de gaz brut "B".

De plus, en commandant le clapet de ponction 54, il est possible d'injecter des gaz de combustion "G2" dans le catalyseur 16 pour élever sa température. Les gaz de combustion "G2" peuvent en outre être plus ou moins riches en oxygène en fonction de la position du clapet 55.

L'invention propose aussi un procédé de commande de ce dispositif pour amorcer le catalyseur 16, c'est-à-dire pour chauffer le catalyseur 16 jusqu'à sa température d'amorçage "Ta" ou pour maintenir la température du catalyseur 16 au-delà de sa température d'amorçage "Ta".

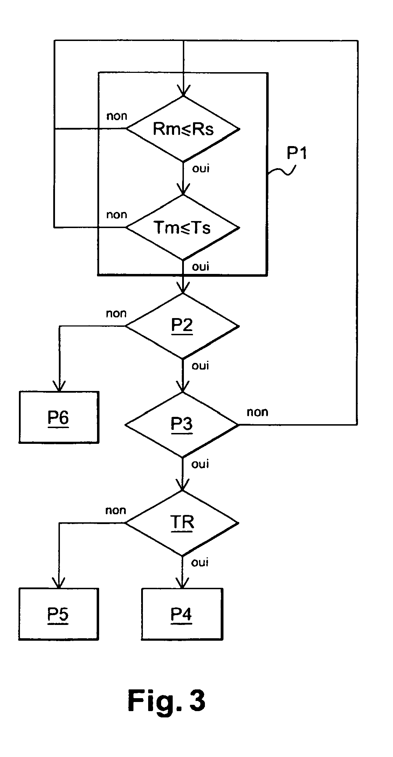

Ce procédé, qui est illustré schématiquement à la figure 3, comporte principalement quatre phases.

Lors d'une première phase "P1" d'initialisation, on compare un régime du moteur à combustion mesuré "Rm" à un régime dit de seuil "Rs". A cet effet, le véhicule comporte des moyens 66 de mesure du régime moteur "Rm", comme représenté aux figures 1 et 2.

On compare aussi une température mesurée "Tm" du catalyseur 16 à une température dite de seuil "Ts". A cet effet, le catalyseur comporte ici une sonde de mesure de la température 68, comme représenté aux figures 1 et 2.

Les moyens de mesure du régime 66 et la sonde 68 sont ici reliées à l'unité de commande. Les opérations de comparaison sont ici réalisées automatiquement par l'unité de commande.

Une deuxième phase "P2" de contrôle est enclenchée lorsque le régime moteur mesuré "Rm" est inférieur au régime de seuil "Rs" et lorsque la température mesurée "Tm" du catalyseur 16 est inférieure à la température de seuil "Ts". Dans ces conditions, on estime que les gaz d'échappement "G1" ne sont pas suffisamment chauds pour amorcer rapidement le catalyseur 16 ou le maintenir amorcer.

Au cours de cette deuxième phase de contrôle "P2", l'unité de commande contrôle si le reformeur 30 est opérationnel pour produire du reformat d'hydrogène purifié "R".

Lorsque le reformeur 30 est opérationnel, c'est-à-dire qu'il est apte à produire immédiatement du reformat "R", une troisième phase "P3" d'évaluation de la capacité de production instantanée d'hydrogène du reformeur est enclenchée.

Au cours de cette troisième phase "P3", la quantité instantanée d'hydrogène que le reformeur est susceptible de produire pour chauffer le catalyseur est évaluée, par exemple par l'unité de commande.

Si le reformeur 30, bien que fonctionnel, n'est pas susceptible de fournir instantanément du reformat, on considère que les capacités de production de reformat sont entièrement dédiées à la production d'énergie électrique par la pile à combustible. Il n'est donc pas possible d'amorcer le catalyseur 16 en utilisant le reformeur 30 ou le brûleur 36, et le procédé est réinitialisé.

Sinon, si le reformeur 30 est susceptible de produire une quantité instantanée de reformat "R" suffisant pour chauffer le catalyseur 16, une opération de test du régime moteur est enclenchée "TR". Lors de ce test "TR", on vérifie si le régime moteur mesuré "Rm" est nul.

Si le régime moteur "Rm" est testé comme n'étant pas nul lors du test "TR", une quatrième phase "P4" de chauffage du catalyseur 16 est enclenchée.

Au cours de cette phase de chauffage "P4", le reformat "R" est injecté dans le conduit d'échappement 12 via la conduite de dérivation 46. L'unité de commande pilote à cet effet le clapet de dérivation de reformat 48 de façon appropriée.

Sinon, lorsque le régime moteur mesuré "Rm" est nul, on considère que ni gaz d'échappement "G1", ni oxygène O₂ ne circulent dans le conduit d'échappement 12. Une cinquième phase de chauffage "P5" est alors enclenchée.

Au cours de cette phase "P5", le brûleur 36 est suralimenté en air de manière que les gaz de combustion "G2" contiennent de l'oxygène O₂, et que les gaz de combustion "G2" ainsi enrichis en oxygène soient injectés dans le conduit d'échappement 12 en plus du reformat "R".

Lorsque le régime du moteur à combustion mesuré reste constamment nul au-delà d'une durée déterminée, on considère que le véhicule est en arrêt prolongé ou en stationnement. Le procédé de maintien en température est donc arrêté.

Si, lors de la deuxième phase "P2", le reformeur 30 est contrôlé comme n'étant pas fonctionnel, une phase alternative "P6" de chauffage est enclenchée.

Au cours de cette phase alternative "P6", le brûleur 36 est activé de manière à alimenter le conduit d'échappement en gaz de combustion chauds "G2" de manière à chauffer le catalyseur 16 via la conduite de ponction 52. A cet effet, le clapet de ponction 54 est commandé de manière à laisser les gaz de combustion "G2" transiter vers le conduit d'échappement 12.

Selon une variante du procédé, lors des quatrième et cinquième phases de chauffage "P4", "P5", le catalyseur 16 peut être alimenté avec du gaz brut "B" ou avec un mélange de reformat "R" et de gaz brut "B". Les clapets de dérivation de reformat 48 et/ou de détournement 64 sont alors commandés à cet effet par l'unité de commande.

Dans les dispositifs décrits précédemment, le reformeur 30 est toujours associé à une pile à combustible 18. L'invention est cependant applicable à un dispositif dans lequel le reformeur 30 n'est pas associé à une pile à combustible. Le reformeur 30 peut par exemple être dédié à la production de reformat "R" pour amorcer le catalyseur 16.

Dans ce cas, il sera compris que le procédé de commande décrit précédemment n'est plus limité par les contraintes imposées par la pile à combustible 18.

## Revendications

1. Procédé de commande d'un dispositif de chauffage pour un catalyseur d'oxydation (16) agencé dans un conduit d'échappement (12) de moteur à combustion (10) de véhicule automobile, comportant un reformeur (30) d'hydrocarbures qui est embarqué à bord du véhicule et qui est raccordé au conduit d'échappement (12) en amont du catalyseur d'oxydation (16) de manière à alimenter le catalyseur (16) en hydrogène (B,R), du type dans lequel le reformeur (30) comporte :
- un premier étage (56) de production d'un gaz dit brut (B) qui contient un mélange d'hydrogène et de monoxyde de carbone ;
- un second étage (58) de purification qui est alimenté en gaz brut (B) et dans lequel l'hydrogène est séparé du monoxyde de carbone de manière à produire un reformat d'hydrogène purifié (R), le catalyseur (16) étant susceptible d'être alimenté en reformat d'hydrogène purifié (R),
**caractérisé en ce qu'**il comporte les phases suivantes :
- une première phase (P1) d'initialisation au cours de laquelle on compare un régime du moteur à combustion mesuré (Rm) à un régime dit de seuil (Rs), et au cours de laquelle on compare une température mesurée du catalyseur (Tm) à une température dite de seuil (Ts) ;
- une deuxième phase (P2) de contrôle qui est enclenchée lorsque le régime moteur mesuré (Rm) est inférieur au régime de seuil (Rs) et lorsque la température mesurée du catalyseur (Tm) est inférieure à la température de seuil (Ts), et au cours de laquelle on contrôle si le reformeur (30) est opérationnel pour produire du reformat d'hydrogène purifié (R) ;
- une troisième phase (P3) d'évaluation de la capacité de productions instantanée d'hydrogène du reformeur (30) qui est enclenchée lorsque le reformeur (30) est opérationnel, et au cours de laquelle on évalue la quantité instantanée d'hydrogéne que le reformeur (30) est susceptible de produire pour chauffer le catalyseur (16) ;
- une quatrième phase (P4) de chauffage du catalyseur qui est enclenchée lorsque le reformeur (30) est susceptible de produire une quantité instantanée d'hydrogène suffisante pour chauffer le catalyseur (16), et au cours de laquelle l'hydrogène est injecté dans le conduit d'échappement (12).

2. Procédé selon la revendication précédente du type dans lequel le reformeur comporte un brûleur (36) de chauffage du reformeur (30) qui est alimenté en carburant et en air, et qui produit des gaz de combustion chauds (G2) qui sont évacués dans une conduite d'évacuation (42), et du type dans lequel une conduite de ponction (52) raccorde la conduite d'évacuation (42) au conduit d'échappement (12) en amont du catalyseur d'oxydation (16),
**caractérisé en ce que**, lors d'une cinquième phase (P5) de chauffage qui est enclenchée alternativement à la quatrième phase de chauffage (P4) si le régime moteur mesuré (Rm) est nul, le brûleur (36) est suralimenté en air de manière que les gaz de combustion (G2) contiennent de l'oxygène, et que les gaz de combustion (G2) ainsi enrichis en oxygène soient injectés dans le conduit d'échappement (12) en plus de l'hydrogène.

3. Procédé selon la revendication précédente, **caractérisé en ce que** lorsque le régime du moteur à combustion mesuré (Rm) reste constamment nul au-delà d'une durée déterminée, le procédé de commande du dispositif de chauffage est arrêté.

4. Procédé selon la revendication 2, **caractérisé en ce que** si, lors de la deuxième phase de contrôle (P2), le reformeur (30) est contrôlé comme n'étant pas fonctionnel, une phase alternative de chauffage (P6) est enclenchée, au cours de laquelle le brûleur (36) est activé de manière à alimenter le conduit d'échappement (12) en gaz de combustion chauds (G2) de manière à chauffer le catalyseur (16).

## Claims

1. Method for controlling a heating device for an oxidation catalyst (16) placed in an exhaust line (12) of a motor vehicle internal combustion engine (10), comprising a hydrocarbon reformer (30) which is mounted on board the vehicle and is connected to the exhaust line (12) upstream of the oxidation catalyst (16) in order to feed the catalyst (16) with hydrogen (B,R), of the type in which the reformer (30) comprises:
-- a first stage (56) for producing a gas called raw gas (B) that contains a mixture of hydrogen and carbon monoxide;
-- a second purification stage (50) which is fed with raw gas (B) and in which the hydrogen is separated from the carbon monoxide in order to produce a purified hydrogen reformate (R), the catalyst (16) being suitable for being fed with purified hydrogen reformate (R),
**characterized in that** it comprises the following phases:
-- a first initialization phase (P1) in which an engine speed at measured combustion (Rm) is compared to a speed called threshold speed (Rs), and in which a measured catalyst temperature (Tm) is compared to a temperature called threshold temperature (Ts);
-- a second control phase (P2) which is initiated when the measured engine speed (Rm) is lower than the threshold speed (Rs) and when the measured catalyst temperature (Tm) is lower than the threshold temperature (Ts), and in which it is determined whether the reformer (30) is operational for producing purified hydrogen reformate (R);
-- a third phase (P3) for evaluating the instantaneous hydrogen production capacity of the reformer (30), which is initiated when the reformer (30) is operational, and in which the instantaneous quantity of hydrogen that the reformer (30) is capable of producing to heat the catalyst (16) is evaluated;
-- a fourth catalyst heating phase (P4) which is initiated when the reformer (30) is capable of producing a sufficient instantaneous quantity of hydrogen to heat the catalyst (16), and in which the hydrogen is injected into the exhaust line (12).

2. Method according to the preceding claim, of the type in which the reformer comprises a burner (36) for heating the reformer (30) which is fed with fuel and air, and which produces hot combustion gases (G2) which are removed via a discharge line (42), and of the type in which a branch line (52) connects the discharge line (42) to the exhaust line (12) upstream of the oxidation catalyst (16),
**characterized in that**, during a fifth heating phase (P5) which is initiated alternately with the fourth heating phase (P4) if the measured engine speed (Rm) is zero, the burner (36) is fed with excess air so that the combustion gases (G2) contain oxygen, and so that the combustion gases (G2) thus enriched with oxygen are injected into the exhaust line (12) in addition to the hydrogen.

3. Method according to the preceding claim, **characterized in that** when the engine speed at measured combustion (Rm) remains constantly zero beyond a predefined period, the heating device control method is stopped.

4. Method according to Claim 2, **characterized in that** if, during the second control phase (P2), the reformer (30) is determined to be not functional, an alternative heating phase (P6) is initiated, during which the burner (36) is activated in order to feed the exhaust line (12) with hot combustion gases (G2) in order to heat the catalyst (16).

## Patentansprüche

1. Verfahren zur Steuerung einer Heizvorrichtung für einen in einer Abgasleitung (12) eines Verbrennungsmotors (10) eines Kraftfahrzeugs angeordneten Oxidationskatalysator (16), die einen Kohlenwasserstoff-Reformer (30) aufweist, der sich an Bord des Fahrzeugs befindet und mit der Abgasleitung (12) vor dem Oxidationskatalysator (16) verbunden ist, um den Katalysator (16) mit Wasserstoff (B, R) zu speisen, von dem Typ, bei dem der Reformer (30) aufweist:
- eine erste Stufe (56) zur Erzeugung eines so genannten Rohgases (B), das eine Mischung aus Wasserstoff und Kohlenmonoxid enthält;
- eine zweite Stufe (58) der Reinigung, die mit Rohgas (B) gespeist wird und in der der Wasserstoff vom Kohlenmonoxid getrennt wird, um ein gereinigtes Wasserstoff-Reformat (R) zu erzeugen, wobei der Katalysator (16) mit gereinigtem Wasserstoff-Reformat (R) gespeist werden kann,
**dadurch gekennzeichnet, dass** es die folgenden Phasen aufweist:
- eine erste Phase (P1) der Initialisierung, während der eine gemessene Drehzahl des Verbrennungsmotors (Rm) mit einer so genannten Schwellendrehzahl (Rs) verglichen wird, und während der eine gemessene Temperatur (Tm) des Katalysators mit einer so genannten Schwellentemperatur (Ts) verglichen wird;
- eine zweite Phase (P2) der Prüfung, die eingeschaltet wird, wenn die gemessene Motordrehzahl (Rm) unter der Schwellendrehzahl (Rs) liegt, und wenn die gemessene Temperatur (Tm) des Katalysators unter der Schwellentemperatur (Ts) liegt, und während der geprüft wird, ob der Reformer (30) betriebsbereit ist, um ein gereinigtes Wasserstoff-Reformat (R) zu erzeugen;
- eine dritte Phase (P3) der Abschätzung der augenblicklichen Wasserstoff-Erzeugungsfähigkeit des Reformers (30), die eingeschaltet wird, wenn der Reformer (30) betriebsbereit ist, und während der die augenblickliche Wasserstoffmenge abgeschätzt wird, die der Reformer (30) erzeugen kann, um den Katalysator (16) zu erwärmen;
- eine vierte Phase (P4) der Erwärmung des Katalysators, die eingeschaltet wird, wenn der Reformer (30) eine ausreichende augenblickliche Wasserstoffmenge erzeugen kann, um den Katalysator (16) zu erwärmen, und während der der Wasserstoff in die Abgasleitung (12) injiziert wird:

2. Verfahren nach dem vorhergehenden Anspruch, von dem Typ, bei dem der Reformer einen Brenner (36) zum Erwärmen des Reformers (30) aufweist, der mit Kraftstoff und Luft gespeist wird, und der heiße Verbrennungsgase (G2) erzeugt, die in eine Abfuhrleitung (42) abgeführt werden, und von dem Typ, bei dem eine Entzugsleitung (52) die Abfuhrleitung (42) mit der Abgasleitung (12) vor dem Oxidationskatalysator (16) verbindet,
**dadurch gekennzeichnet, dass** in einer fünften Phase (P5) der Erwärmung, die alternativ zur vierten Phase (P4) der Erwärmung eingeschaltet wird, wenn die gemessene Motordrehzahl (Rm) Null ist, der Brenner (36) mit Luft aufgeladen wird, damit die Verbrennungsgase (G2) Sauerstoff enthalten, und die so angereicherten Verbrennungsgase (G2) in die Abgasleitung (12) zusätzlich zum Wasserstoff injiziert werden.

3. Verfahren nach dem vorhergehenden Anspruch, **dadurch gekennzeichnet, dass**, wenn die gemessene Drehzahl (Rm) des Verbrennungsmotors jenseits einer bestimmten Dauer konstant Null bleibt, das Verfahren zur Steuerung der Heizvorrichtung angehalten wird.

4. Verfahren nach Anspruch 2, **dadurch gekennzeichnet, dass**, wenn in der zweiten Prüfphase (P2) der Reformer (30) als nicht betriebsbereit geprüft wird, eine alternative Phase (P6) der Erwärmung eingeschaltet wird, während der der Brenner (36) aktiviert wird, um die Abgasleitung (12) mit heißen Verbrennungsgasen (G2) zu speisen, um den Katalysator (16) zu erwärmen.
